# EUROPEAN PATENT APPLICATION

(11) **EP 3 808 433 A1**
(43) Date of publication of application: **21.04.2021**
(21) Application number: 20197494.6
(22) Date of filing: 22.09.2020
(51) Int. Cl.: B01D 61/02, B01D 61/08, B01D 65/02, C13B 10/12, C13B 20/16

(54) **FILTRATION SYSTEM TO BE USED IN CONCENTRATING SUGAR SYRUP**

(30) Priority: 16.10.2019 TR 201915945
(71) Applicant: Dogus Yiyecek ve Icecek Üretim Sanayi Ticaret A.S., Maltepe - Istanbul (TR)
(72) Inventor: KARCEBAS, Atilla, MALTEPE - ISTANBUL (TR)
(74) Representative: Yamankaradeniz, Kemal

(57) **Abstract**

The invention is related to a filtration system (S) to be used in the sugar industry comprising, a plurality of heat exchangers (1) so as to keep the temperature of the sugar syrup at a desired level, at least one pump (3) so as to transfer said sugar syrup, a membrane filtration (4) which has many osmosis filters (4.1) in its structure and increases the concentration of the sugar syrup.

## Description

### TECHNICAL FIELD

The invention relates to a filtration system to be used in concentrating sugar syrup.

The invention is particularly related to a filtration system which enables the sugar syrup to be filtered by spending mechanical energy in order to save energy in the sugar production industry.

### STATE OF THE ART

Pre-washing, main washing and rinsing processes are applied in the sugar production process. In these steps, sugar beets are purified from stone, sand and beet tail. The washed beets are minced in mincing machines and the beet cell tissues are broken down. Following this, the beet mincings are taken to the scalding trough with the transfer tapes and are mixed with the circulation syrup drawn from the diffusor into the scalding trough. In this step, the mincings are heat by means of using circulation syrup which is passed through the heater. Thus, it is possible to bring the mincings to an optimum diffusion temperature of 70 °C to 72 °C and to obtain sugar by denaturing the sugar beet cells. At the same time, the mincings can be pumpable to the diffuser by mixing the same with the syrup. The extraction of the sugar with the water is realized here according to the reverse flow principle. Diffusion water and press water are given from the upper part. The mincings moves from the bottom or the tower to the top portion by means of the wings rotation in the diffusion, and the raw syrup advances towards the bottom portion of the tower. The syrup exiting out of the diffusion is taken to liming. While raw syrup is supplied from one end of the trough and it is provided to advance from section to another section, the lime milk [Ca(OH)₂] supplied from the other end of the trough from the bottom is mixed with the raw syrup by progressing in the opposite direction under the fixed wings. Therefore, it is possible to precipitate the non-sugar substances in the raw syrup gradually. As a result of first liming, the non-sugar substances were gelated and ready for filtering. The aim in the second liming is to break the invert sugar in the syrup into pieces and stop the bacterial growth. The raw syrup passing through the first and second liming is brought to carbonation. In the first carbonation which works according to the reverse flow principle, the syrup is supplied from the top, carbon dioxide gas is supplied from the bottom and the muddy sugar is precipitated in the decanter. In order to receive the lime remained in the filtered first carbonation syrup, the second carbonation process is required to be applied. Thin syrup is obtained by means of filtering the syrup through the filters. The dry substance of the obtained thin syrup is between 12% - 15%. In order to thicken said thin syrup, the thin syrup is taken to the evaporating stations. The thin syrup entering into the evaporating station from the bottom rises after evaporation with the effect of the heating steam effect appearing outside the pipes passing through the steam chamber and passes to the evaporator by descending from the circulation pipe in the middle of the heating chamber. The syrup steam called brude is taken from the top portion of the apparatus and supplied to the steam chamber of the other evaporator. The final evaporator of the gradual evaporators is connected to the condenser from the top portion. Therefore, the pressure is reduced gradually in all evaporators, the boiling of the syrup is facilitated and sucrose crashing is prevented due to the high temperature in the evaporators. The syrup taken from the evaporator is called thick syrup. Said thick syrup is a viscous sugar solution which has a color between dark yellow and light brown. The dry substance of the thick syrup is between 60% - 65%, its purity is one unit more than the syrup. The thick syrup which is appropriate for cooking is sent to the refinery. The first process in the refinery is filtering the thick syrup. Pressurized filters are used for this process. The syrup taken for cooking is evaporated and thickened until it becomes supersaturated. The crystal grains are formed after powdered sugar is supplied to the supersaturated syrup and the grains are enlarged by continuing the thickening process. The cooking process is terminated when the dry substance of the pulp reaches to 92% - 94% interval and the bottom cover of the apparatus is opened and the pulp is taken to refrigerants. The pulp in the refrigerants is transferred to the centrifuges with a flow rate which is required by the centrifuges. The pulp taken to the trough is continuously mixed. The sucrose crystals in the crystal pulp are separated in the centrifuges. The sugar crystals separated from the syrup are washed by means of spraying water and steam and are sent to the drying unit. The sugar which is mixed and dried with hot air is sent to the sugar bunker after it is cooled. The crystal sugar is screened before it is taken to the storage area. In the final case, the crystal sugar is obtained and it is ready for packaging process.

However, concentration of sugar syrup is performed with the help of the evaporators in the present applications. The energy cost in the processes made with evaporators is higher than the sugar syrup production concentrated up to an amount with reverse osmosis. Moreover, the equipment investment is high based on their capacity sizes. For this reason, a concentration management is required which will reduce the energy and equipment investment expenses and provides a productive and sustainable production.

The International patent application with publication number WO2018214643 A1 is found in the patent and literature research made in the direction of the state of the art. In said document, a sugar production system which comprises a pre-processing unit, multi-stage membrane filtration unit and concentrate processing unit is disclosed.

As a result, many problems and disadvantages are encountered in said technical field as mentioned above; the current applications are insufficient in solving these problems and disadvantages. This situation makes it necessary to make an improvement and innovation in the state of the art.

### BRIEF DESCRIPTION OF THE INVENTION

The present invention is related to a filtration system to be used in sugar industry which fulfills the abovementioned requirements, eliminates all disadvantages and brings some additional advantages.

The main aim of the invention is to use mechanical energy instead of thermal energy and reduce required energy cost for the concentration process by means of increasing the sugar syrup brix with membrane filtration. The thermal energy used in the state of the art provides the evaporation of the raw material which is in the evaporator and will increase its concentration and the removal of the water by making heat transfer to the evaporator by means of steam. However, in the inventive method, mechanical energy is used. Therefore, the particle thickness, density and viscosity of the raw material is controlled and, concentration of the raw material is provided after the water is filtered (permeate) with pressure. The steam which is used in evaporation with the thermal energy; is obtained from the natural gas, fuel or coal, pump and filters operating with electric are used in the evaporation with mechanical energy. Thus the energy cost is reduced.

Another aim of the invention is to provide capacity increase in the production. The evaporator capacities are used more effectively, because the brix of the sugar syrup entering the evaporator is higher. At the same time, permeate exiting out of the filtration is reevaluated in the diffusion tower and the amount of water is reduced and the heat productivity is enabled.

In order to fulfill all abovementioned aims and to provide solutions to the problems in the state of the art, the invention is a filtration system to be used in the sugar production industry; it comprises the following;
- A plurality of heat exchangers in order to keep the temperature of the sugar syrup passing through said filtration system at a desired level,
- At least one pump in order to transfer said sugar syrup within the filtration system,
- A membrane filtration which has many osmosis filters increases the concentration of the sugar syrup.

The structural and characteristic features of the present invention will be understood clearly by the following detailed description. Therefore the evaluation shall be made by taking this detailed description and the figures into consideration.

### FIGURES CLARIFYING THE INVENTION

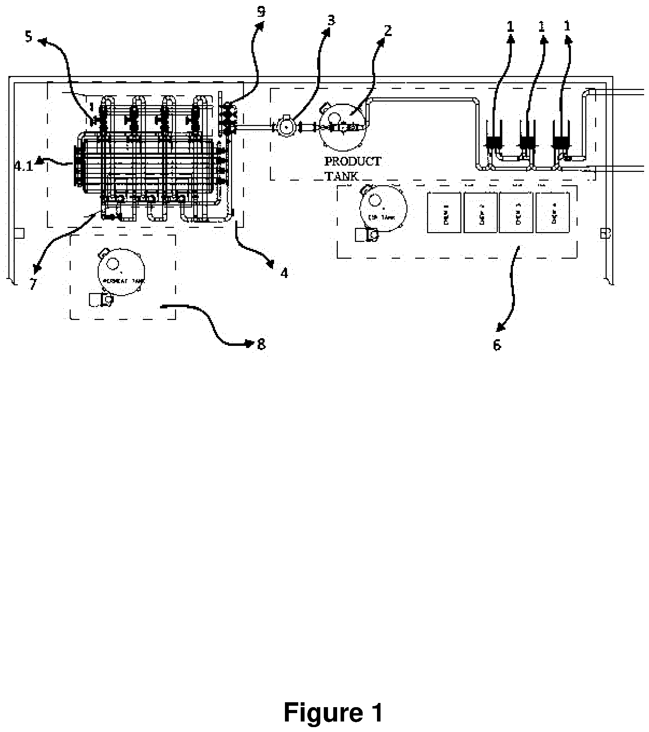

- Figure 1: is a general view of the inventive system.

### REFERENCE NUMBERS

- S: Concentration system
- 1: Heat exchanger
- 2: Product tank
- 3: Pump
- 4: Membrane filtration
4.1 Filter
- 5: Valve
- 6: CIP section
- 7: Filter pump
- 8: Depot
- 9: Glass flow meter

### DETAILED DESCRIPTION OF THE INVENTION

In this detailed description, the preferred embodiments of the invention is described only for clarifying the subject matter in a manner such that no limiting effect is created.

The invention relates to a filtration system (S) to be used in sugar production industry. There is a plurality of heat exchangers (1) within the structure of the concentration system (S) so as to reduce the temperature of the thin syrup obtained during sugar production. The temperature of said thin syrup is 95 °C which exits from carbonation in the sugar production process. The temperature in the heat exchanger (1) is required to be reduced, so as to prevent this syrup from giving damage to the filters in the membrane filtration. For this purpose, the temperature of the thin syrup coming at 95 °C is reduced to 89 °C in the first heat exch anger (1). A sugar solution at 55 °C with increased brix, exiting from the filtration is used for providing the required heat exchange. The temperature of the thin syrup coming at 89 °C from the first heat exchanger (1) is reduced to 67 °C in the second heat exchanger (1). The sugar solu tion with increased brix is used in the same manner as the prior step in said heat exchanging process. The temperature of the thin syrup exiting from the first heat exchanger (1) and the second heat exchanger (1) is reduced to 50 °C by passing through the sugar solution with increased brix at 55 °C coming out of the filtration. In addition to said heat exchangers (1), in order to keep the temperature stable at 50 °C in the concentration system (S), there are other heat exchangers (1).

The thin syrup with a decreased temperature of 50 °C is taken to a product tank (2). The thin syrup is pumped into the membrane filtration (4) under 5 bar constant pressure with the help of a pump (3). Said membrane filtration (4) is a system with 16 filters (4.1) in total consisting of 4 housings and 4 filters (4.1) each of which are connected to aforementioned 4 housings. Said filters (4.1) are osmosis filters (4.1) which are resistant to pH and temperature variations, are manufactured from polypropylene. In the invention, preferably Alpha Lava RO98 pht type filter is used. There are bypass valves (5) between said filters (4.1). Therefore, when contamination occurs in one of the filters (4.1), the filter (4.1) which is contaminated is excluded and the next filter (4.1) is used. The sugar syrup which enters to the membrane filtration (4) with 14 brix, exits with 21 brix at 55 °C. The sugar syrup portion which cannot pass the filtration is sent to the heat exchangers (1) as retentate. The retentate passing through the heat exchanger (1) is mixed with the thin syrup and it is sent to the evaporator as 16 brix in total. On the other hand, the contaminated filter (4.1) is cleaned by means of a CIP section (6). Said CIP section (6) preferably serves for cleaning the filters (4.1) every 12 hours. In cleaning said filter (4.1), preferably osmosis filter (4.1) cleaning chemicals are used. The cleaning process is advanced as the pre-washing, acid washing, intermediate rinsing and alkaline washing and final rinsing. The alkaline washing among these process steps is preferably performed every two days. In the washing process carried out in the CIP section (6), acid washing and alkaline washing is performed in 200 seconds and at a temperature of 50 °C. There is at least on e filter pump (7) between filters (4.1) so as to transfer the thin syrup to the filters (4.1) and CIP section (6) with a predetermined pressure. The water (syrup) portion (permeate; c<0,5 Bx) passing through the filtration is stored in a depot (8). The extraction of the sugar with water is realized by sending permeate to the diffuser. There is max. 0.5 Brix of dry substance within the water (syrup) passing through the filter. Therefore, the dry substance is regained back to the production.

The osmosis filters (4.1) used in the structure of the inventive filtration system (S) requires high pressure and a higher pump power. However, the sugar permeability is less when compared to other similar structures. This condition minimizes the risk of sugar presence in permeate. Moreover, a cooling and heating system can be integrated into the inventive filtration system (S) so as to provide a long economic life of membrane filtration (4) and to provide its proper functioning.

The flow rate of permeate coming out of the structure of the inventive filtration system (S) is measured and there is a glass flow meter (9) so as to control whether there is obstruction in the filters (4.1) or not.

The inventive filtration system (S) is designed for heating the coming syrup and exiting syrup and for saving energy in the manner. The sugar syrup coming with a temperature of 95 °C, first of all heats the exiting syrup and cools by giving its heat and is cooled to a desired temperature of 50 °C with by another heat exchanger with the help of water. Here, the water used in cooling is subsequently used in heating the raw syrup. Therefore, it is possible to carry out the filtration process at a temperature of 50 °C.

## Claims

1. A filtration system (S) to be used in sugar production industry, **characterized by comprising,** the following;
• A plurality of heat exchangers (1) so as to keep the temperature of the sugar syrup passing through said filtration system (S) at a desired level,
• At least one pump (3) so as to transfer said sugar syrup within the filtration system (S),
• A membrane filtration (4) which has many osmosis filters (4.1) in its structure increases the concentration of the sugar syrup.

2. A filtration system (S) according to claim 1, **characterized by comprising;** at least one CIP section (6) which enables to clean the contaminated filter (4.1).

3. A filtration system (S) according to claim 1 or claim 2, **characterized by comprising;** A valve (5) located between said filters (4.1).

4. A filtration system (S) according to claim 3, **characterized by comprising;** At least one filter pump (7) between the filters (4.1) so as to transfer the sugar syrup to the filters (4.1) and the CIP section (6).
